# EUROPEAN PATENT SPECIFICATION

(11) **EP 3 103 611 B1**
(45) Date of publication and mention of the grant of the patent: **04.09.2019**
(21) Application number: 15171750.1
(22) Date of filing: 11.06.2015
(51) Int. Cl.: B29C 41/04

(54) **METHOD FOR MANUFACTURING A PRODUCT OF PLASTIC MATERIAL**
VERFAHREN ZUR HERSTELLUNG EINES PRODUKTS AUS KUNSTSTOFF
PROCÉDÉ DE FABRICATION D'UN PRODUIT EN MATIÈRE PLASTIQUE

(43) Date of publication of application: 14.12.2016
(73) Proprietor: Officine Metallurgiche G. Cornaglia S.p.A., 10092 Beinasco (TO) (IT)
(72) Inventor: CORNAGLIA, Umberto, 10027 Moncalieri (TO) (IT); CORNAGLIA, Pier Mario, 10024 Moncalieri (TO) (IT); MANZO, Edoardo, 10092 Beinasco (TO) (IT)
(74) Representative: Robba, Pierpaolo

(56) References cited:
- WO-A1-95/34420
- US-A1- 2003 219 560
- US-A1- 2009 162 620

## Description

### Technical Field

The present invention relates to a method for manufacturing a product of plastic material. In particular, the present invention relates to a method for manufacturing a product of plastic material which needs to have a pleasing and attractive outer appearance and therefore finds advantageously - though not exclusively - application in the making of plastic products for interior design such as lamps, armchairs, chairs, tables and the like. The present invention further relates to a product of plastic material obtained by the method according to the invention.

### Background Art

For several decades now, products made of plastic materials have been of common use in all aspects of everyday's life and use of plastic materials is no longer limited only to the making of low-value products, but it finds application also in the making of quality products and design products.

Also in the field of interior design, plastic materials are increasingly widespread and are replacing conventional raw materials such as wood, glass and the like for the manufacturing of tables, chairs, lamps and other interior design accessories.

The reasons for the success of products of plastic materials lie mainly in the availability and inexpensiveness of raw materials, the possibility of using more cost-effective manufacturing methods, the easiness of obtaining complex shapes and - in the end - in final costs for the purchaser that are remarkably lower than those of corresponding products made of different and costlier raw materials.

However, it is evident that in fields such as the interior design field, where the outer appearance of the product is crucial for the consumer's choice, special care must be paid to the finishing of products in order to confer them pleasing and attractive aesthetical features.

Such finishing operations are therefore a critical and economically significant aspect of the entire manufacturing process in its whole.

According to prior art, varnishes, enamels or the like are used in order to provide products of plastic materials with an appealing and pleasing outer appearance.

The use of varnishes, however, entails a series of drawbacks, first of all the need for complex and costly steps of preparing the surface of the semi-finished products before varnish is applied as well as for complex and costly steps of finishing after application of varnish.

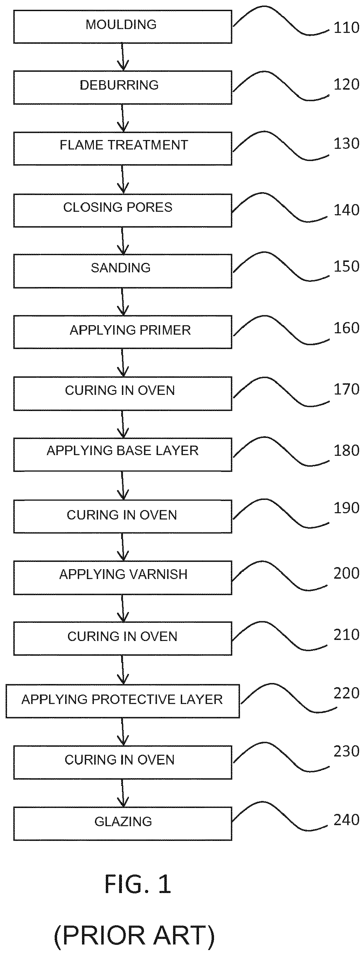

With reference to Figure 1, polyethylene is usually employed as raw material for products of plastic materials and said products are made by moulding, for instance injection-moulding or, mainly, rotational moulding or rotomoulding.

At the end of the moulding step 110 a semi-finished product is obtained that has surface characteristics which entirely unsuitable for varnishing. The surface of such a semi-finished product is actually irregular, porous and rich of fatty substances (typical of olefins such as polyethylene) and adhesion of the varnish to the surface of said semi-finished product would be poor.

Therefore when exiting the mould the polyethylene semi-finished product is subjected to a deburring step 120 for removing irregularities and surface flaws and to a subsequent flame treatment 130 for removing fatty substances from the surface.

Afterwards a step 140 of applying a paste for closing the pores that are present on the surface of the semi-finished product and a subsequent sanding step 150 for removing excessive paste and polishing the surface of the semi-finished product.

At this point it is possible to apply a priming layer (primer); such application must be followed by a curing step in a low-temperature oven 170 for properly and uniformly drying the primer.

Application of the primer is followed by a step of applying a base layer 180, followed by a step of drying and dehydrating by curing in a low-temperature oven 190.

Only at this stage it is possible to proceed to the actual varnishing step 200, by applying the varnish that is suitable for the intended final aesthetical result. Such varnishing step, too, must be followed by a curing step in a low-temperature oven 210.

At the end of the varnishing step, the product of plastic material is not yet ready for storage and subsequent transportation for marketing.

It still has to undergo a step of applying a transparent protective layer 220 and a corresponding step of drying and dehydrating by curing in a low-temperature oven 230, as well as a final glazing step 240.

From what has been set forth above, it is clear that the varnishing of products of plastic materials requires so high a number of operations that the actual step of manufacturing by moulding has an irrelevant weight in the entirety of the production costs of the products. Another drawback related to the varnishing of products of plastic materials concerns the limitations in respect of the aesthetical effects that can be obtained.

Indeed, it is evident that when a final product in plain colour is to be obtained, the varnishing step is simple and cost-convenient per se.

However, when a final product with more complicated patterns and motifs is desired, said varnishing step becomes correspondingly more complex and cost-burdensome, whereby the making of products of plastic materials with a particularly complex and detailed outer appearance becomes impracticable from the viewpoint of production costs, if not even from the viewpoint of technical feasibility.

It is also known from WO9534420 (A1) how to transfer patterns to an object made of plastic by placing a material, preferably fabric, carrying a predetermined pattern, into contact against a work piece, then heating the material to a predetermined temperature, and allowing the patterned material to remain in contact with the plastic material for a predetermined time, so that the pattern is completely or partly taken up by the work piece, whereupon said pattern carrying material is removed. According to this technique the patterned material is removed from the work piece and only the pattern remains on the outer surface of the workpiece thereby causing said pattern to remain exposed to scratches and abrasions without the protection of the outer film of pattern carrying material.

An object of the present invention is therefore to overcome the drawbacks of prior art by providing a method for manufacturing products of plastic materials with a pleasing and attractive outer appearance that is simple and cost-convenient so as to allow a dramatic reduction in production time and costs.

Another object of the present invention is to provide a method for manufacturing products of plastic materials that guarantees wide freedom of choice among different outer appearances, even very complex ones.

These and other objects are achieved by the method according to the invention, as claimed in the appended claims.

### Summary of the Invention

Owing to the fact that the method according to the invention provides for applying an outer decorative film directly onto the surface of the semi-finished product of plastic material, production time and costs are dramatically reduced in comparison with varnished products.

In particular, the number of manufacturing steps is remarkably reduced, which brings about a saving of time and money.

In addition, the number of equipments required for obtaining the finished product is remarkably reduced in comparison with the case of varnishing, with an additional advantage in terms of reduction of overall productions costs.

Furthermore, use of an outer decorative film guarantees an extremely high versatility for the method according to the invention and allows to obtain products of plastic materials with the desired outer appearance - including extremely complicated motifs and patterns - while maintaining limited production costs.

According the invention said outer decorative film is a polymer film, made of polyvinyl chloride.

Such films are known for instance from documents US 4 670 490 and WO 2005/075591. In prior art, however, use of such films is limited to the application to finished products, i.e. products that already have per se a surface finishing such as varnish or the like.

It is instead neither known nor suggested to use vinyl films or the like for direct application to the surface of semi-finished products of plastic materials.

### Brief Description of the Drawings

Further features and advantages of the invention will become more apparent from the following detailed description of a preferred embodiment, given merely by way of nonlimiting example, with reference to the accompanying drawings, in which:
- Figure 1 schematically shows by means of a block diagram a method for manufacturing products made of plastic materials according to prior art;
- Figure 2 schematically shows by means of a block diagram a method for manufacturing products made of plastic materials according to a preferred embodiment of the invention;
- Figures 3a and 3b show examples of products of plastic materials that can be obtained by the method according to the invention.

### Detailed Description of a Preferred Embodiment of the Invention

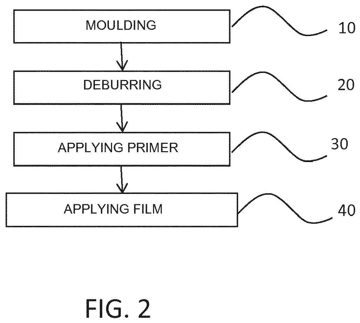

Referring to Figure 2, the method according to the invention for manufacturing a product of plastic material provides, in a manner known per se, a moulding step 10 for obtaining a semi-finished product.

According to the invention, the moulding step is effected by means of rotational moulding. Rotational moulding is a moulding technique especially suitable for producing big hollow products of plastic material.

According to this technique, the mould is charged with the plastic material (usually in powder form) and is closed; subsequently the mould is rotated (about one or two axes) inside an oven, in order to raise the temperature of the material and make it adhere to the mould walls. The dwelling time in the oven is chosen so as to be long enough to allow to obtain an homogeneous material and simultaneously short enough to avoid the risk of deterioration of the material. The mould is subsequently cooled down (by means of air or sprayed water jets) so that the material solidifies; as a consequence of the cooling, a reduction in size of the semi-finished product is obtained, which facilitates the subsequent step of taking said semi-finished product out of the mould. Finally, the mould is opened and the semi-finished product is taken out of it.

The plastic material used as raw material is preferably polyethylene, although use of other appropriate polymers such as cross-linked polyethylene, nylon and polypropylene is not excluded.

According to the described embodiment, when exiting the mould the semi-finished product is preferably subjected to a deburring step 20. Said step allows to grossly remove the most important surface irregularities, due for instance to the joining elements between different parts of the mould.

Subsequently, according to the invention, the method provides a step 40 in which an outer decorative film is applied directly onto the surface of the semi-finished product thus obtained. Therefore, according to the invention the outer decorative film is applied to the surface of the semi-finished product when this exits the mould, substantially in a seamless manner.

According to the invention, said outer decorative film is sized and shaped so as to completely cover the whole outer surface - i.e. the surface visible from the outside - of the semi-finished product. Preferably, the application of said outer film is preceded by a step of applying a primer layer 30 onto the surface of said semi-finished product.

Said outer film is a polymer film. Said outer decorative film is a so-called vinyl film, i.e. made of polyvinyl chloride (PVC).

It will be evident from what has been said above regarding prior art that, in comparison with the use of varnishes and the like, the use of such film advantageously permits to dramatically simplify the operations for obtaining the finished product, substantially by avoiding the steps of preparing the outer surface of the semi-finished product prior to application and allowing application of the film itself to the semi-finished product upon its exit from the moulding step without interruption.

Indeed, although upon exit from the mould the semi-finished product is preferably subjected to the deburring step 20 for removing the grossest surface irregularities, the method according to the invention does not require any steps of sanding or polishing the outer surface of the semi-finished product.

In addition, unlike what happens with varnishes, the fact that the surface of the semi-finished product is porous does not jeopardize at all the correct and precise application of the outer decorative film to the surface of said semi-finished product. Therefore no application of paste or similar product for closing the pores of the surface of the semi-finished product is necessary.

Furthermore, although according to the described embodiment it is preferable to apply a primer layer onto the surface of the semi-finished product before applying the film, it is not necessary to use the same accuracy that is required for the uniform and homogeneous adhesion of a varnish, and therefore the step of curing in an oven following the application of the primer can be avoided.

More generally, the method according to the invention does not require any oven for drying the semi-finished product, whereby the number of equipments necessary for its implementation is remarkably reduced with respect to the traditional methods using varnishes.

In this regard it should be noted that it is possible to choose a film made of a material having high resistance to scratches and abrasions, so the application of a protective product becomes unnecessary, while guaranteeing at the same time that the aesthetical quality of the product is maintained over time.

From what has been described above it is evident that the method according to the invention allows to remarkably reduce production time and, most of all, production costs, which can be up to 20 - 30% lower than those of the traditionally used methods.

In addition, the use of an outer decorative film allows more freedom in choosing the aesthetical elements to be used and allow to obtain products of plastic materials with highly complex motifs.

Indeed, thanks to the fact that a film is used as outer decorative layer, it will be possible to make complex decorations by using means and techniques for printing on paper, including computerized means and techniques for graphics and photography, which will remarkably increase freedom in choosing the aesthetical effects that can be obtained.

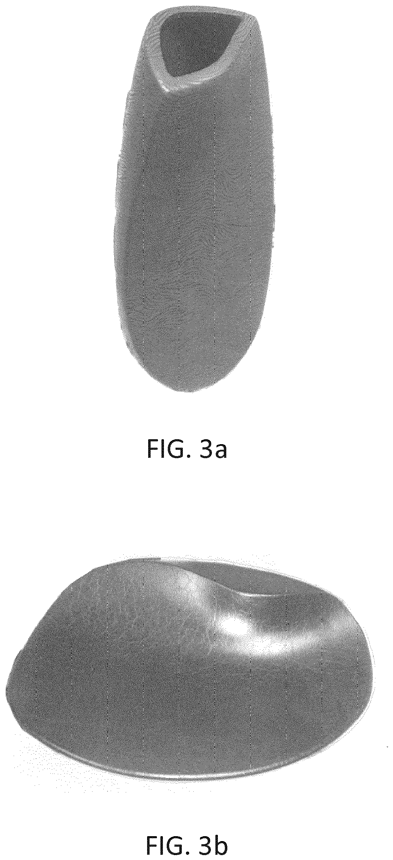

In particular, it will be possible to obtain products of plastic material that have complex patters (see for example the product of Figure 3a) or that even reproduce the aesthetical aspect of valuable materials (see for example the product of Figure 3b, in which the aspect of leather is reproduced).

In addition, the use of particular outer films also allows to confer to the obtained product of plastic material special characteristics to the touch (rough effect, satin effect, velvet effect and so on), said result being difficult - if not impossible - to obtain when using varnishes.

Furthermore, the use of outer decorative films instead of traditional varnishes allows to modify the outer appearance of products over time (in case repair is needed or even only in accordance with the consumer's taste) in a very simple and cost-convenient manner.

## Claims

1. Method for manufacturing a product of plastic material which needs to have a pleasing and attractive outer appearance, comprising the steps of:
- making a semi-finished product of plastic material by moulding (10), said semi-finished product being obtained by rotational moulding, wherein said semi-finished product has a porous outer surface;
**characterized in that** said method further comprises the step of
- applying an outer decorative film directly onto the porous outer surface of said semi-finished product (40) when this exits the mould, upon its exit from the moulding step without interruption, whereby said semi-finished product is not subjected to any steps of sanding or polishing the outer surface of the semi-finished product and said semi-finished product is not subjected to any steps of applying a paste for closing the pores of the surface of the semi-finished product and **in that** said outer decorative film is made of polyvinyl chloride, wherein said outer decorative film is sized and shaped so as to cover the entire outer surface of said semi-finished product, whereby said outer decorative film confers said pleasing and attractive outer appearance of the product.

2. Method according to claim 1, wherein said semi-finished product is subjected to a step of applying a primer (30) before applying said outer decorative layer.

3. Method according to claim 1, comprising the steps of:
- charging a mould with said plastic material in powder form;
- closing said mould;
- introducing said mould into an oven in order to raise the temperature of said plastic material;
- rotating said mould about one or more axes;
- letting said mould cool down;
- taking the obtained semi-finished product out of said mould; and
- applying said outer decorative layer onto the surface of said semi-finished product in a seamless manner.

4. Method according to claim 1, wherein said outer decorative film has a high resistance to scratches and abrasions.

5. Method according to any one of the preceding claims, wherein said plastic material is polyethylene or cross-linked polyethylene or nylon or polypropylene, preferably polyethylene.

## Patentansprüche

1. Verfahren zur Herstellung eines Produkts aus Kunststoff, das eine angenehme und attraktive äußere Erscheinung haben soll, mit den folgenden Schritten:
- Herstellen eines Halbzeugs aus Kunststoff durch Formung (10), wobei das Halbzeug durch Rotationsformung erhalten wird und das Halbzeug eine poröse Außenfläche hat,
**dadurch gekennzeichnet, dass** das Verfahren zusätzlich die folgenden Schritte enthält:
- Aufbringen einer äußeren dekorativen Schicht direkt auf der porösen Außenfläche des Halbzeugs (40), wenn dieses aus der Form entnommen wird, beim Verlassen des Formungsschritts ohne Unterbrechung, wobei das Halbzeug keinen Schritten des Schleifens oder Polierens der äußeren Oberfläche des Halbzeugs unterzogen wird und das Halbzeug keinen Schritten des Auftragens einer Paste zum Schließen der Poren der Oberfläche des Halbzeugs unterzogen wird,
und dass die äußere dekorative Schicht aus Polyvinylchlorid hergestellt ist, wobei die äußere dekorative Schicht so bemessen und geformt ist, dass sie die gesamte Außenfläche des Halbzeugs bedeckt, wobei die äußere dekorative Schicht die angenehme attraktive und äußere Erscheinung des Produkts bewirkt.

2. Verfahren nach Anspruch 1, wobei das Halbzeug einem Schritt des Auftragens einer Grundbeschichtung (30) unterzogen wird, bevor die äußere dekorative Schicht aufgetragen wird.

3. Verfahren nach Anspruch 1 mit den folgenden Schritten:
- Befüllen einer Form mit dem Kunststoff in Pulverform,
- Schließen der Form,
- Einbringen der Form in einen Ofen, um die Temperatur des Kunststoffs zu erhöhen,
- Rotieren der Form um eine oder mehrere Achsen,
- Abkühlen lassen der Form,
- Herausnehmen des erhaltenden Halbzeugs aus der Form, und
- nahtloses Aufbringen der äußeren dekorativen Schicht auf die Oberfläche des Halbzeugs.

4. Verfahren nach Anspruch 1, wobei die äußere dekorative Schicht eine hohe Kratz- und Abriebfestigkeit hat.

5. Verfahren nach einem der vorstehenden Ansprüche, wobei der Kunststoff Polyethylen oder vernetztes Polyethylen oder Nylon oder Polypropylen ist, vorzugsweise Polyethylen.

## Revendications

1. Procédé de fabrication d'un produit de matière plastique qui a besoin d'avoir un aspect extérieur agréable et joli, comprenant les étapes de :
- réalisation d'un produit semi-fini de matière plastique par moulage (10), ledit produit semi-fini étant obtenu par moulage par rotation, ledit produit semi-fini ayant une surface extérieure poreuse ;
**caractérisé en ce que** ledit procédé comprend en outre l'étape de
- application d'un film décoratif extérieur directement sur la surface extérieure poreuse dudit produit semi-fini (40) lorsque celui-ci sort du moule, lors de sa sortie de l'étape de moulage sans interruption,
moyennant quoi ledit produit semi-fini n'est soumis à aucune étape de sablage ou de polissage de la surface extérieure du produit semi-fini et ledit produit semi-fini n'est soumis à aucune étape d'application d'une pâte pour boucher les pores de la surface du produit semi-fini
et **en ce que** ledit film décoratif extérieur est constitué de polychlorure de vinyle, dans lequel ledit film décoratif extérieur est dimensionné et conformé de façon à couvrir l'ensemble de la surface extérieure dudit produit semi-fini,
moyennant quoi ledit film décoratif extérieur confère ledit aspect extérieur agréable et joli du produit.

2. Procédé selon la revendication 1, dans lequel ledit produit semi-fini est soumis à une étape d'application d'un apprêt (30) avant application de ladite couche décorative extérieure.

3. Procédé selon la revendication 1, comprenant les étapes suivantes :
- le chargement d'un moule avec ladite matière plastique sous forme de poudre ;
- la fermeture dudit moule ;
- l'introduction dudit moule dans une étuve afin d'élever la température de ladite matière plastique ;
- la mise en rotation dudit moule autour d'un ou de plusieurs axes ;
- le fait de laisser ledit moule refroidir ;
- le retrait du produit semi-fini obtenu dudit moule ; et
- l'application de ladite couche décorative extérieure sur la surface dudit produit semi-fini sans discontinuité.

4. Procédé selon la revendication 1, dans lequel ledit film décoratif extérieur a une haute résistance aux rayures et aux abrasions.

5. Procédé selon l'une quelconque des revendications précédentes, dans lequel ladite matière plastique est du polyéthylène ou du polyéthylène réticulé ou du nylon ou du polypropylène, de préférence du polyéthylène.
